# EUROPÄISCHE PATENTSCHRIFT

(11) **EP 0 525 432 B1**
(45) Veröffentlichungstag und Bekanntmachung des Hinweises auf die Patenterteilung: **12.12.2001**
(21) Anmeldenummer: 92111224.9
(22) Anmeldetag: 02.07.1992
(51) Int. Cl.: H04Q 3/545

(54) **Verfahren zur Änderung von Systemkonfigurationsdatensätzen in einem Fernmeldevermittlungssystem**
Method of changing system configuration data in a telecommunications exchange system
Méthode de changement des données de configuration de système dans un système de commutation de télécommunications

(30) Priorität: 31.07.1991 DE 4125389
(43) Veröffentlichungstag der Anmeldung: 03.02.1993
(73) Patentinhaber: SIEMENS AKTIENGESELLSCHAFT, 80333 München (DE)
(72) Erfinder: Stephan, Luzia, Dipl. Inf., W-8066 Bergkirchen-Feldgeding (DE); Höfner, Jürgen, W-8083 Mammendorf (DE); Wöss, Friedrich, Dipl. Ing., W-8156 Otterfing (DE)

(56) Entgegenhaltungen:
- EP-A- 0 237 841
- EP-A- 0 347 644
- TELCOM REPORT, Bd.9, Nr.1, Januar 1986, BERLIN, DE Seiten 22 - 26 LEICHUM ET AL. 'Behandlung der Datenbasis bei der Inbetriebnahme und bei Erweiterungen von EWSD-Vermittlungstellen'
- GLOBECOM '85, SESSION 29, PAPER 6, Bd.2, 2. Dezember 1985, NEW ORLEANS, US Seiten 89 - 902 CHAHIL 'System initialization in a distributed digital switch'

## Beschreibung

Der Ausbauzustand moderner Fernmeldevermittlungssysteme wird durch Konfigurationsdaten beschrieben, die zu Datensätzen zu zusammengefaßt in entsprechenden Speichern abgespeichert sind. Die Anzahl der Systemkonfigurationsdaten hängt dabei von dem Systemausbauumfang (Zahl der angeschlossenen bzw. anschließbaren Endgeräte; endgeräteindividuelle Leistungsmerkmale; Amtsleitungen, etc.) als auch von der Struktur der im System vorhandenen Speicher bzw. Dateien ab.

Durch eine von der Firma Siemens herausgegebene Druckschrift (Special Issue of telcom report and Siemens magazine COM, "ISDN in the Office", December 1985, ordering No. A19100-L523-V849 X-6700, ISBN 3-8009-3849-9), Seiten 56-64 und 92-103, ist bereits ein Fernmeldevermittlungssystem bekannt, an das analoge und digitale Telefone, Fernkopierer, Multifunktionale Terminals, Arbeitsplatzsysteme, Personal Computer, Teletex-und Bildschirmtextstationen und Endgeräte anschließbar sind.

Die Betriebstechnik-Software des bekannten Vermittlungssystems umfaßt bereits Programmodule, die der Sicherung der Datenkonsistenz dienen. Das Sicherstellen der Datenbasiskonsistenz bei Änderung statischer Daten wird dabei durch sogenannte Up-date-Programmteile und durch besondere Koordinationsmechanismen erreicht, die darin bestehen, die änderbaren statischen Daten in dem aus Funktionsmodulen (Durchschalteeinheit, periphere Funktionsmodule) bestehenden System in einem Arbeitsspeicher des betreffenden Funktionsmoduls und in Hintergrundspeichern parallel abzulegen. Dabei ist weiter vorgesehen, daß geänderte Teile der Datenbasis automatisch in zyklischen Abständen oder manuell durch betriebstechnische Programmodule in einer Festplatte aktualisiert werden. Bei dem bekannten Vermittlungssystem sind allerdings keine besonderen Maßnahmen für den Fall vorgesehen, daß periphere Funktionsmodule zeitweise vom System abgekoppelt sind. Periphere Funktionsmodule sind beispielsweise bei Wartungsarbeiten zeitweise vom System abzukoppeln.

Aus Bergmann, Lehrbuch der Fernmeldetechnik, Band 2, Berlin 1986, Seiten 1573/1574 ist es bekannt, zur Datenwiederherstellung im Verlustfall außer dem periodischen Erstellen von Sicherungskopien eine Protokolldatei einzurichten. In dieser Protokolldatei werden alle Zugriffe, die zu Veränderungen des Datenbestandes führen, protokolliert. Kommt es zu einer Zerstörung der Datenbank, so kann zunächst die Sicherungskopie zurückgeschrieben und anschließend können alle seit der Erstellung der Sicherungskopie angefallenen Veränderungen anhand der Protokolldatei durch ein Dienstprogramm nachvollzogen werden. In diesem Zusammenhang sind aber systemperiphere Einheiten nicht berücksichtigt.

Aus der europäischen Patentanmeldung EP 0 237 841 A1 ist bereits ein Verfahren zur Bearbeitung von Konfigurationsänderungen einer Datenverarbeitungsanlage und eine Vorrichtung zur Durchführung des Verfahrens bekannt. Dabei werden der Inhalt eines Konfigurationsspeichers und der Inhalt eines oder mehrerer Funktionsmodule in einer starren Abfolge der Änderungsprozeduren geändert. Auch hier sind keine besonderen Maßnahmen für den Fall vorgesehen, daß periphere Funktionsmodule zeitweise vom System abgekoppelt sind.

In diesem Zusammenhang liegt der Erfindung das Problem zugrunde, die Datenkonsistenz für ein eingangs genanntes Fernmeldevermittlungssystem auch in den Fällen sicherzustellen, in denen periphere Funktionsmodule zeitweise vom System abgekoppelt sind.

Dieses Problem wird ausgehend vom Stand der Technik durch die kennzeichnenden Merkmale des Patentanspruchs 1 gelöst.

Das erfindungsgemäße Verfahren zeichnet sich zunächst durch den Vorteil aus, daß die Inhalte der Datenbasen peripherer Funktionsmodule, die zeitweise vom System abgekoppelt werden, nicht zentral im System abzulegen sind. Ein weiterer Vorteil besteht darin, daß für das Fernmeldevermittlungssystem im laufenden Betrieb oder auch schon vor der Erstinbetriebnahme periphere Funktionsmodule vorgesehen werden können. Die erforderliche Datenkonsistenz läßt sich bei einer späteren erstmaligen Ankopplung der Funktionsmodule an das System zuverlässig und rasch herstellen, ohne daß das System in seinem schaltungstechnischen Aufbau zu verändern ist.

Nach einer weiteren vorteilhaften Ausführungsform der Erfindung werden nach jeder Erstellung von Sicherungskopien der Inhalte aller Datenbasen des Systems eine zentrale sicherungskopieindividuelle Tabelle gebildet, in die in das System eingegebene betriebstechnische Kommandos eingeschrieben werden, die die Inhalte bestimmter Datenbasen verändern. Die entsprechenden Kommandoinformationen werden durch Informationen ergänzt, die die Ausführung bzw. die Nichtausführung des betreffenden betriebstechnischen Kommandos individuell für jede betroffene Datenbasis bezeichnen. Hierdurch läßt sich die Datenkonsistenz auch für eine Vielzahl von Funktionsmodulen zuverlässig realisieren, selbst wenn ein Teil der Funktionsmodule zeitweise vom System abgekoppelt ist oder auch erst zu einem späteren Zeitpunkt erstmals an das System angekoppelt werden soll.

Erfindungsgemäß ist nach einer weiteren Ausführungsform vorgesehen, daß die von der An- und Abkopplung peripherer Funktionsmodule initiierten Prozeduren durch manuell in das System eingegebene betriebstechnische Kommandos oder durch systemintern gebildete, den Verbindungszustand der peripheren Funktionsmodule bezeichnende Informationen ausgelöst werden. Die letztgenannte Alternative ermöglicht es, das erfindungsgemäße Verfahren auch in den Fällen durchzuführen, in denen Baugruppen peripherer Funktionsmodule aus der Systemschaltung herausgelöst bzw. diese (wieder) eingefügt werden, ohne daß entsprechende betriebstechnische Kommandos erforderlich sind.

Die Erfindung wird nun anhand der Zeichnungen beschrieben.

Es zeigen:
- FIG 1: eine schematische Darstellung der betriebstechnischen Hardware- und Softwarekomponenten eines Fernmeldevermittlungssystems, mit dem das Verfahren gemäß der Erfindung durchführbar ist;
- FIG 2: Tabellen, auf die Systemrechner bei den Prozeduren zur Sicherung der Datenbasiskonsistenz zugreifen;
- FIG 3: ein Flußdiagramm der betriebstechnischen Prozeduren zur Herstellung der Datenkonsistenz, welche mittels des Fernmeldevermittlungssystems nach FIG 1 in den Fällen durchführbar sind, in denen alle peripheren Funktionsmodule an das System angekoppelt sind; und
- FIG 4: ein Flußdiagramm des erfindungsgemäßen Verfahrens.

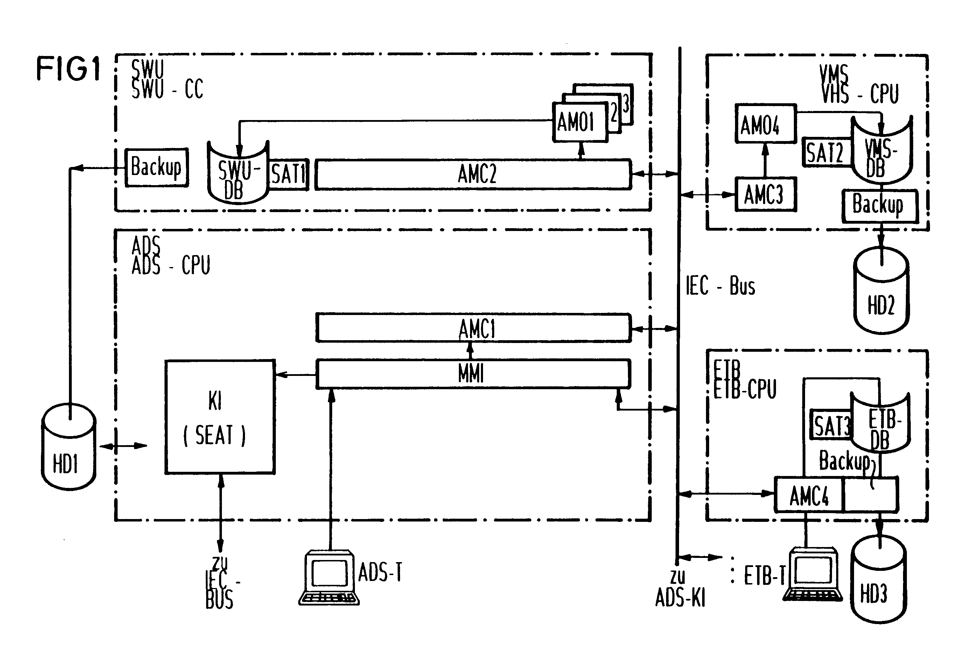

Das in FIG 1 in seiner Betriebstechnikhardware- bzw. -soft-warestruktur schematisch dargestellte Fernmeldevermittlungssystem kann grundsätzlich - wie das in den veröffentlichten europäischen Patentanmeldungen
EP 0 306 693 A1 (entsprechend US-PS 4,903,258),
EP 0 303 870 A2 (entsprechend US-PS 5,018,097),
EP 0 303 869 A1 (entsprechend US-PS 5,047,923) offenbarte System aufgebaut sein.

Der Software-Architektur des bekannten Vermittlungssystems liegen die folgenden Kriterien zugrunde:

Das erste Architektur-Kriterium betrifft die Dreiteilung der Vermittlungs-Software in die Funktionskomplexe Peripherietechnik PP (Peripheral Processing), Leitungstechnik DH (Device Handler) und Vermittlungstechnik CP (Call Processing). Dabei nimmt die Peripherietechnik PP die Transportfunktionen war und läuft im wesentlichen auf den Anschlußbaugruppen für die Endgeräte und Leitungen.

Die Vermittlungstechnik CP erbringt die eigentlichen Leistungen für die Benutzeroberflächen der Endgeräte bzw. für die Schnittstellen zu den verschiedenen Sätzen.

Das zweite Architekturkriterium stellt die an Dienste und Endgeräten orientierte Zustands- bzw. Anreizverarbeitung in der Vermittlungstechnik CP dar. Das Dienstekriterium wird als ISDN-Protokollelement der Steuerungs-Software angeboten, die dienst-spezifisch aufgrund der mitgelieferten Geräteadresse den Geräte-typ ermittelt.

Das dritte Architekturkriterium zur einfachen Behandlung der Endgeräte- und Dienstevielfalt besteht in der strikten Anwendung der eigenständigen Datenbasis, auf welche die Programme prinzipiell nur auf logischer Ebene zugreifen.

Das in FIG 1 dargestellte Fernmeldevermittlungssystem weist vier Funktionsmodule SWU, ADS, VMS und ETB auf. Das Funktionsmodul SWU stellt eine Durchschalteeinheit dar, die aus einem nicht dargestellten Koppelnetz und aus einem zentralen Rechner SWU-CC besteht, der vorzugsweise durch eine Mehrprozessorsteuerung gebildet ist. Das Funktionsmodul ADS ist eine betriebstechnische Einheit, deren Funktion für das betriebstechnische Zusammenwirken mit den übrigen Funktionsmodulen des Systems in der weiteren Beschreibung erläutert wird. An die beiden vorgenannten Funktionsmodule sind betriebstechnisch über einen IEC-Bus periphere, aufgabenorientierte Funktionsmodule anschließbar, beispielsweise ein Funktionsmodul VMS für die Zwischenspeicherung von Sprachnachrichten sowie ein Funktionsmodul ETB, mit dem ein elektronisches Telefonbuch verwaltet wird. Daneben lassen sich weitere periphere, aufgabenorientierte Funktionsmodule, beispielsweise ein Funktionsmodul für die automatische Verteilung von Anrufen (automatic call disstribution) in das System einbinden, welches wie das Funktionsmodul VMS strukturiert sein kann. Den Funktionsmodulen ADS, SWU und VMS sind Betriebstechnik-Rechnerprogrammodule AMC 1, 2, 3 zugeordnet. Die Module AMC 2 und 3, die den Funktionsmodulen SWU und VMS zugeordnet sind, haben die Aufgabe, die Übermittlung der betriebstechnischen Kommandos zwischen den einzelnen Funktionsmodulen zu steuern und die Programmodule AMO1, AMO2 und AMO3 bzw. AMO4 zu starten. Hierzu werden diese Programmodule aus den entsprechenden Festspeichern HD1 bzw. HD3 in nicht dargestellte funktionsmodulinviduelle Zwischenspeicher geladen. Weiterhin haben die Module AMC die Aufgabe, die zweite Tabelle SAT, die noch beschrieben, wird zu pflegen. Das Modul AMC1 hat im dargestellten Ausführungsbeispiel lediglich die Aufgabe der Kommandoübermittlung, das Modul AMC4, das dem Funktionsmodul ETB zugeordnet ist, hat lediglich die Aufgabe, die zweite Tabelle SAT3 zu pflegen.

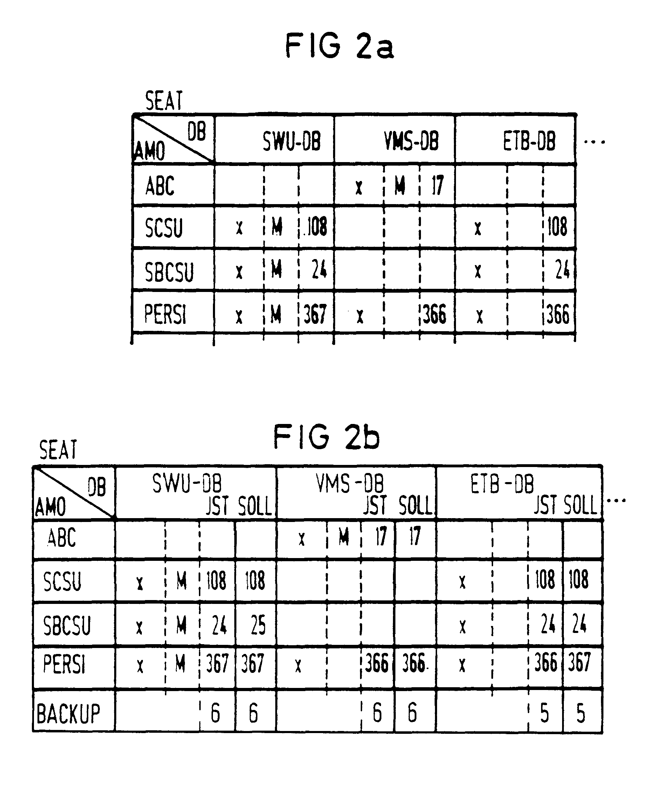

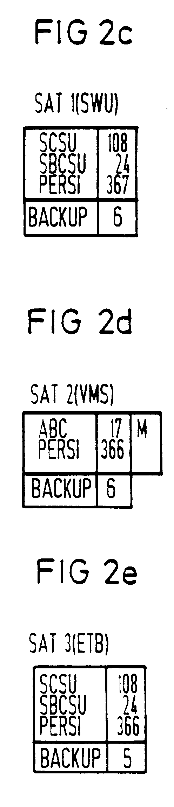

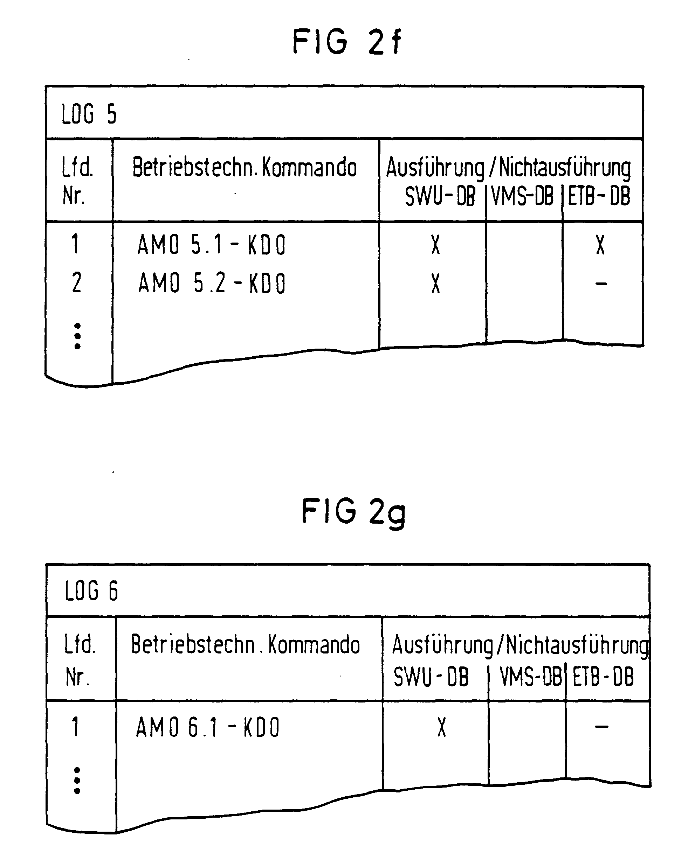

Dem Funktionsmodul SWU sind drei Programmodule AMO1, AMO2 und AMO3 zugeordnet, die in der in Fig. 2 dargestellten Tabelle SEAT mit SCSU, SBCSU und PERSI bezeichnet sind. Diese drei Programmodule ändern Systemdatenkonfigurationssätze, die in der Datenbasis SWU-DB abgespeichert sind, und die wie ebenfalls die Tabelle SEAT zeigt, in der Datenbasis VMS-DB abgespeichert sind. Die Datenbasis SWU-DB ist für AMO1 (=SCSU), AMO2 (=SBCSU) und AMO3 (=PERSI) die sogenannte Masterdatenbasis, also eine Datenbasis übergeordneter Hierarchiestufe, während die Datenbasis VMS-DB für AMO1, AMO2 und AMO3 eine sogenannte abhängige oder Slavedatenbasis ist, das heißt eine Datenbasis untergeordneter Hierarchiestufe. Für AMO4 ist VMS-DB die Masterdatenbasis; die zugehörige abhängige Datenbasis ist nicht dargestellt.

Die Datenbasis des Funktionsmoduls ETB hat bezüglich keiner Systemkonfigurationsdatensätze den Status einer Masterdatenbasis, so daß auch dem Funktionsmodul ETB kein Programmodul AMO zugeordnet ist.

Die Funktionsmodule SWU, VMS, ETB verfügen über je eine schon erwähnte eigenständige Datenbasis SWU-DB, VMS-DB und ETB-DB. Es wird davon ausgegangen, daß mindestens ein Teil der Datensätze von Systemkonfigurationsdaten in mehr als einer der genannten Datenbasen abgespeichert ist. Die weitere Beschreibung bezieht sich auf diese Datensätze, soweit nicht andere Eigenschaften der Datensätze genannt werden. Zur Sicherstellung der für einen ordnungsgemäßen Systembetrieb erforderlichen Datenkonsistenz sind Datensätze, die den gleichen Sachverhalt beispielsweise Rufnummer und Name eines Teilnehmers, in jeder betroffenen Datenbasis zu ändern (siehe das der Personenidentifizierung dienende AMO "PERSI" in Figur 2). Zur Sicherung der in den Datenbasen abgespeicherten Datensätzen und Tabellen (SEAT, SAT1 ... SATx) sind unter anderem jeweils eine für sich bekannte "Backup"-Funktion und Hintergrundspeicher HD1, HD2, HD3 (Harddisk HD) vorgesehen.

Die betriebstechnische Einheit ADS ist mit einem betriebstechnischen Endgerät ADS-T verbindbar. Dieses dient der Eingabe von betriebstechnischen Kommandos AMO-KDO. Das betriebstechnische Endgerät ADS-T steht mit einer Einheit MMI (Mensch-Maschine-Interpreter) in Verbindung, die durch ein Textprozessor-Programmodul gebildet ist, das zur Umsetzung von Kommandoinformationen - z.B. nach der CCITT-Man-Machine-Language - in applikationsgerechte Dateninformationen dient. Weitere Teilaufgaben des Textprozessor-Programmoduls MMI sind die Syntaxüberprüfung, die Analyse von Kommandos entsprechend Parameterbaumdefinitionen-Parsing-, die Durchführung von Parametereinzelprüfungen gegen applikationsbezogene Datentabellen und die Aufbereitung von Ausgabetexten.

Jedes Kommando, das in das Endgerät ADS-T oder in ein gegebenenfalls weiteres Endgerät ETB-T eingebbar ist, besteht aus drei Teilen; aus einer Bezeichnung des betriebstechnischen Auftrags AMO1, AMO2, AMO3 oder AMO4, aus einer Bezeichnung der vorzunehmenden Aktion wie beispielsweise "Ändern", "Löschen", "Abfragen" und aus Parameterdaten wie beispielsweise eine Teilnehmerrufnummer, die den jeweiligen betriebstechnischen Auftrag und die Aktion spezifizieren. Kommandos, die sich auf eine Abfrage beschränken und nicht zu einer Änderung von Systemkonfigurationsdatensätzen führen, werden hier nicht betrachtet.

Die Einheit MMI steht mit einer Einheit KI in Verbindung, die ihrerseits mit dem Hintergrundspeicher HD1 und mit dem die Funktionsmodule verbindenden IEC-Bus verbunden ist. In der Steuerung ADS-CPU ist eine Einheit KI aktiv, die die eigentliche Aufgabe erfüllt, die Datenkonsistenz aller Systemdatenbasen zu erhalten, wobei sie die Tabelle SEAT verwendet.

In den Datenbasen des Systems sind unter anderem mehrfach Systemkonfigurationsdatensätze abgespeichert, die systemweit konsistent zu halten sind. So ist beispielsweise eine Rufnummer 123 und der zugehörige Name "Mr. X" eines Teilnehmers sowohl in der Datenbasis SWU-DB zur Anzeige an digitalen Endgeräten als auch in der Datenbasis ETB-DB für die eigentliche Telefonbuchfunktion abgespeichert. Ändert sich der betreffende Name bzw. die Zuordnung von Rufnummer und Name, so ist der entsprechende Datensatz in beiden zuvor genannten Datenbasen in gleicher Weise zu ändern.

Das in FIG 1 dargestellte System ist derart ausgestattet, daß zwei betriebstechnische Endgeräte ADS-T und ETB-T an die betriebstechnische Einheit ADS bzw. an das periphere Funktionsmodul ETB anschließbar sind. In diese Endgeräte sind betriebstechnische Aufträge eingebbar, die unter Verwendung der dem jeweiligen Funktionsmodul zugeordneten Programmodul AMO durchgeführt werden.

Das in FIG 1 dargestellte Fernmeldevermittlungssystem weist mehrere Systemrechner auf, wobei der Durchschalteeinheit SWU ein zentraler Systemrechner SWU-CC zugeordnet ist und den Funktionsmodulen ADS, VMS und ETB ein oder mehrere dezentrale Rechner ADS-CPU, VMS-CPU, ETB-CPU zugeordnet sind. Jedoch kann ein erfindungsgemäßes Fernmeldevermittlungssystem auch lediglich einen Rechner aufweisen, der dann alle im System anfallenden betriebstechnischen Aufgaben erfüllt; es ist also rechnerunabhängig.

Die Einheit K1 umfaßt eine Tabelle SEAT (Surveillance Entity AMO-Table), die die Zuordnung aller im System vorhandener Programmodule (AMO1, ..., AMOn) zu den jeweiligen funktionsmodulindividuellen Datenbasen SWU-DB, VMS-DB und ETB-DB angibt.

Beispiele für eine derartige Tabelle SEAT sind in den Figuren 2a und 2b dargestellt. In der ersten Spalte sind Programmodule AMO aufgelistet, während in den jeweils aus drei bzw. vier Spalten bestehenden Blöcken, die jeweils einer Funktionsmoduldatenbasis SWU-DB, VMS-DB, ETB-DB, ... zugeordnet sind, Zuordnungsdaten angegeben sind. Im dargestellten Beispiel sind die Programmmodule AMO mit SCSU, SBCSU und PERSI bezeichnet. Das Programmmodul SCSU (Subscriber Configuration Switching Unit) dient den Speichereinträgen, die für die Teilnehmerkonfiguration notwendig sind, das Programmodul SBCSU (Suscriber Bus Configuration Switching Unit) dient den Speichereinträgen, die für die Konfiguration von Teilnehmern am So-Bus notwendig sind und das Programmodul PERSI (Personenidentifikation) dient den Speichereinträgen von personenbezogenen Daten (z.B Name eines Teilnehmers). Das weitere in der Tabelle SEAT aufgelistete Programmmodul ABC ist ein Programmodul, das beispielsweise der Konfigurierung von Sprachpostfächern (voice mail boxes) dient.

Den Funktionsmodulen SWU, VMS und ETB sind individuelle Datenbasen SWU-DB, VMS-DB und ETB-DB zugeordnet, die sich in ihrer Hierarchie unterscheiden. Wie noch beschrieben wird, ist für jedes Programmodul AMO eine sogenannte Masterdatenbasis und wenigstens eine hierarchisch untergeordnete, abhängige Datenbasis vorgesehen.

"x" bedeutet, daß das jeweilige Programmmodul AMO bzw. ein von dem betreffenden Programmodul zu ändernder Systemkonfigurationsdatensatz der jeweiligen funktionsmodulindividuellen Datenbasis zugeordnet ist. Die Information "M", die in der zweiten Blockspalte auftreten kann, gibt an, daß die Datenbasis des jeweiligen Funktionsmoduls für das betreffende Programmodul, bzw. den betreffenden Systemkonfigurationsdatensatz die sogenannte Masterdatenbasis ist. Die Information "M" muß genau einmal pro Zeile in der Tabelle SEAT auftreten.

Masterdatenbasis bezeichnet diejenige Datenbasis, die bei Änderung eines Systemkonfigurationsdatensatzes in einen ersten Änderungsschritt einbezogen wird, während weitere Datenbasen von Funktionsmodulen, die mangels einer Information "M" in der in Figur 2a dargestellten Tabelle für den durch das betreffende Programmodul AMO zu ändernden Systemkonfigurationsdatensatz eine abhängige Datenbasis darstellt, die bei der Bearbeitung von betriebstechnischen Aufträgen erst in einem zweiten oder einem folgenden Änderungsschritt in den Änderungsprozeß einbezogen werden.

Die jeweils dritte Spalte in einem Block enthält ein zusätzliches drittes Datum "IST", das die Anzahl der tatsächlichen Abläufe des betreffenden Programmoduls AMO angibt

Beispielsweise ist dem Programmodul AMO bzw. dem betreffenden Systemkonfigurationsdatensatz SCSU die Ablaufzahlinformation 108 zugeordnet und zwar für die Datenbasen des Funktionsmoduls SWU und des peripheren Funktionsmoduls ETB. Dagegen weist das Programmodul PERSI für die Funktionsmoduldatenbasis SWU-DB die Ablaufzahlinformation 367 auf, während die entsprechende Versioninformation für die peripheren Funktionsmodule VMS und ETB 366 lautet.

Diese unterschiedlichen Ablaufzahlinformationen deuten darauf hin, daß der im Zusammenhang mit dem Programmodul PERSI stehende Systemkonfigurationsdatensatz in den Datenbasen der Funktionsmodule VMS und ETB zu ändern sind; zu dem in der Tabelle SEAT dargestellten Zeitpunkt ist der Systemkonfigurationsdatensatz PERSI systemweit nicht datenkonsistent.

Wie die Eintragungen "M" in Figur 2a zeigen, ist die Datenbasis SWU-DB die Masterdatenbasis für die im Zusammenhang mit den Programmodulen SCSU, SBCSU und PERSI stehenden Systemkonfigurationsdatensätze, während die Datenbasen der übrigen Funktionsmodule VMS-DB und ETB-DB für die drei zuvor genannten Systemkonfigurationsdatensätze abhängige Datenbasen sind. Für den im Zusammenhang mit dem Programmodul ABC stehenden Systemkonfigurationsdatensatz ist die Datenbasis des Funktionsmoduls VMS die Masterdatenbasis.

Die in Figur 2b dargestellte Tabelle SEAT enthält für jede Datenbasis eine vierte Blockspalte, die für jedes Betriebstechnik-Programmodul AMO ein viertes Datum "SOLL" enthält, das die Soll-Anzahl der durchzuführenden Abläufe eines jeden Programmmoduls angibt. Die letzte Zeile der Tabelle SEAT mit der Bezeichnung "BACKUP" wird später betrachtet.

Den Datenbasen SWU-DB, VMS-DB und ETB-DB sind die in den Figuren 2c, 2d und 2e dargestellten Tabellen SAT1, SAT2 und SAT3 zugeordnet, wobei zunächst die jeweils letzte Zeile mit der Bezeichnung "BACKUP" außer Betracht gelassen wird. Diese Tabellen geben an, welche Programmodule AMO Systemkonfigurationsdatensätze in der Datenbasis des betreffenden Funktionsmoduls zugleich Datensätze in der Masterdatenbasis (im vorliegenden Fall SWU-DB) ändern. Dem peripheren Funktionsmodul VMS sind die Programmodule SCSU, SBCSU und PERSI zugeordnet. Diese Informationen sind durch eine Ablaufzahlinformation ergänzt, die die Anzahl der Änderungen in der jeweiligen funktionsindividuellen Datenbasis angibt.

Die in Figur 2d dargestellte Tabelle, die der Datenbasis VMS-DB zugeordnet ist, ist neben der Ablaufzahlinformation in der zweiten Spalte um eine Information "M" in der dritten Spalte ergänzt, die angibt, daß für das in der ersten Zeile aufgelistete Programmodul ABC bzw. den betreffenden Systemkonfigurationsdatensatz die Datenbasis VMS-DB des Funktionsmoduls VMS die Masterdatenbasis ist. Fehlt in den Tabellen SAT1 ... SATx eine entsprechende Eintragung "M", so ist für das betreffende Programmmodul (SCSU, SBCSU, PERSI) die Datenbasis SWU-DB die Masterdatenbasis.

Die zweiten Tabellen SAT1 ... SAT3 werden programmtechnisch aus den in den jeweiligen Datenbasen SWU-DB, VMS-DB und ETB-DB abgespeicherten Systemkonfigurationsdatensätze abgeleitet und jeweils auf den zugehörigen Hintergrundspeichern HD1, HD2 und HD3 abgelegt. Bei jedem Hochlauf der Funktionsmodule SWU, VMS und ETB wird der Inhalt der Tabellen SATx der Einheit K1 übermittelt, die aus dem übermittelten Informationen die Tabelle SEAT bildet.

Die in Figur 2b dargestellte Tabelle SEAT zeigt für die im Zusammenhang mit den Programmodulen ABC und SCSU stehenden Datensätze übereinstimmende Soll- und Ist-Ablaufzahlinformationen, so daß von der Datenkonsistenz der in den entsprechenden Datenbasen abgespeicherten Konfigurationsdatensätzen auszugehen ist.

Für den durch das Programmodul SBCSU zu ändernden Konfigurationsdatensatz ist aus der Tabelle SEAT in Figur 2b abzuleiten, daß die Masterdatenbasis SWU-DB durch das in ein betriebstechnisches Endgerät (ADS-T, ETB-T) eingegebene Kommando von der auszuführenden Datensatzänderung informiert worden ist (Sollablaufzahlinformation = 25). Die Datensatzänderung wurde in der Masterdatenbasis SWU-DB jedoch (noch) nicht durchgeführt (Istablaufzahlinformation = 24). Der abhängigen Datenbasis ETB-DB ist die durchzuführende Änderung nicht mitgeteilt worden und die Änderung ist nicht durchgeführt worden (Soll- und Ist-ablaufzahlinformation ist je 24).

Für den durch das Programmodul PERSI zu ändernden Konfigurationsdatensatz ist aus der Tabelle SEAT in Figur 2b abzuleiten, daß in der Masterdatenbasis PERSI die durchzuführende Änderung durchgeführt worden ist. Die erste abhängige Datenbasis ETB-DB ist über die durchzuführende Änderung informiert worden; die Änderung ist jedoch nicht durchgeführt worden. Der zweiten abhängigen Datenbasis VMS-DB ist die durchzuführende Änderung nicht mitgeteilt worden und die Änderung ist nicht durchgeführt worden.

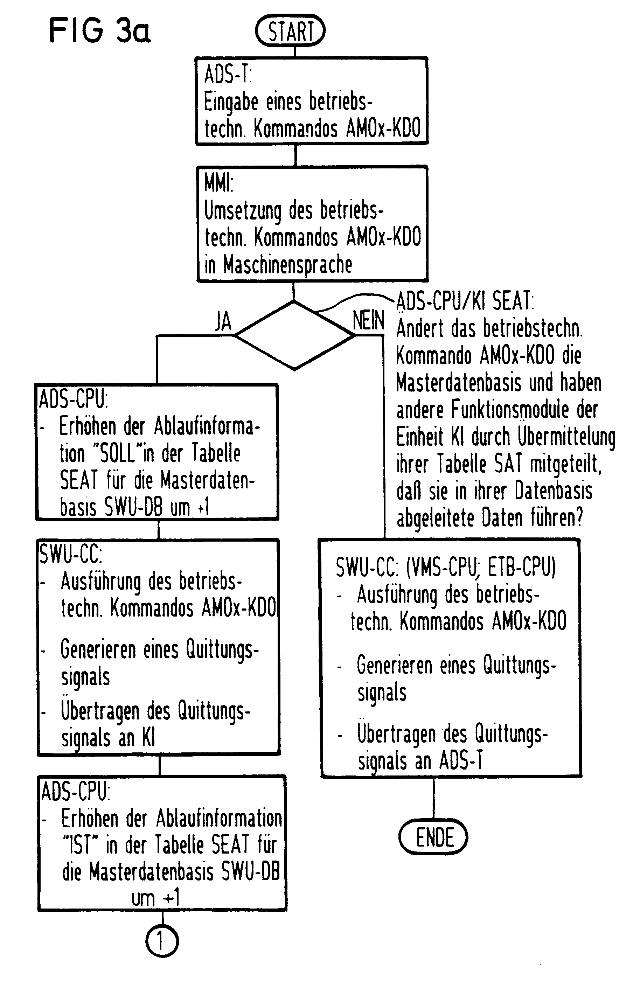

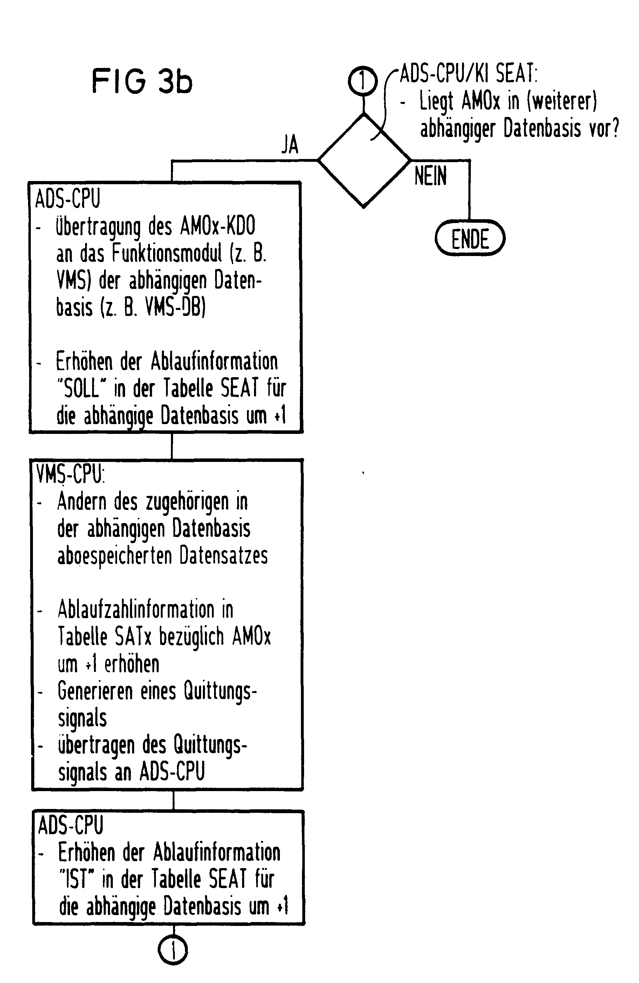

Im folgenden wird die Bearbeitung eines betriebstechnischen Auftrags anhand des in Figur 3 dargestellten Flußdiagramms beschrieben.

In das betriebstechnische Endgerät ADS-T der Einheit ADS wird ein betriebstechnisches Kommando AMO1-KDO1 eingegeben, das wie schon oben ausgeführt aus drei Bestandteilen besteht und zu der Änderung oder Löschung eines Systemkonfigurationsdatensatzes führen soll. Der Auftrag wird der Einheit MMI zugeführt, die die Eingabesignale in an sich bekannter Weise in applikationsgerechten Dateninformationen umsetzt. Die Steuerung ADS-CPU der betriebstechnischen Einheit ADS greift auf die Einheit KI zu und ermittelt anhand der dort abgespeicherten Tabelle SEAT, ob er in dem Kommando angegebene betriebstechnische Auftrag AMO und die ebenfalls angegebene Aktion eine Änderung der Masterdatenbasis bewirkt, für die andere Funktionsmodule über deren Tabellen SAT ein Interesse an den Daten mitgeteilt haben.

Wird bei dem in Figur 2a oder 2b dargestellten Beispiel ein Kommando eingegeben, daß eine der vier aufgeführten Programmmodule ABC, SCSU, SBCSU und PERSI betrifft, so führt die Überprüfung zu einem positiven Ergebnis. Damit ist die Masterdatenbasis VMS-DB (für ABC) bzw. die Masterdatenbasis SWU-DB (für SCSU, SBCSU und PERSI) zu ändern.

Es wird nun davon ausgegangen, daß die Datenbasis SWU-DB der Durchschalteeinheit durch den angegebenen betriebstechnischen Auftrag zu ändern ist. Zunächst wird in der Tabelle SEAT für die Masterdatenbasis SWU-DB die Sollablaufzahlinformation um +1 erhöht. Das Kommando wird nun über den IEC-Bus dem Funktionsmodul SWU zugeführt und dort mit dem entsprechenden AMO bearbeitet. Im Ergebnis wird der geänderte Systemkonfigurationsdatensatz in die Datenbasis SWU-DB eingespeichert. Das jeweilige Programmodul AMO quittiert die ordnungsgemäße Bearbeitung des entsprechenden betriebstechnischen Auftrags AMO, und führt diese Quittung über den IEC-Bus der Einheit KI und dem Eingabeterminal ADS-T zu. Die Einheit erhöht die entsprechende Ablaufzahlinformation "IST" um +1. Im Anschluß daran wird die Tabelle SEAT darauf abgefragt, ob der entsprechende Systemkonfigurationsdatensatz in einer weiteren, d.h. abhängigen Datenbasis des Systems zu ändern ist.

Dies ist hier für die Datenbasis VMS-DB der Fall. Das entsprechende Kommando AMO-KDO1 wird unverändert über den IEC-Bus dem Funktionsmodul VMS zugeführt und dort in analoger Weise bearbeitet. Nach erfolgreichem Abschluß dieses zweiten Änderungsschrittes wird die Ablaufzahlinformation in der Tabelle SAT des Funktionsmoduls ETB ebenfalls um +1 erhöht. Die Steuerung VMS-CPU bildet ebenfalls ein Quittungssignal und führt dieses über den ICB-Bus der Einheit KI zu, in der die Tabelle SEAT hinsichtlich der Ablaufzahlinformation aktualisiert wird.

Betriebstechnische Aufträge können auch in das Endgerät ETB-T eingegeben werden. Betrifft dieser Auftrag beispielsweise das Programmodul bzw. einen Systemkonfigurationsdatensatz PERSI, so wird dieser Auftrag über den IEC-Bus der Einheit MMI und KI zugeführt. Die weitere Bearbeitung erfolgt wie anhand des Flußdiagramms dargestellt wurde. Für das Programmodul PERSI ist, wie die Figuren 2a bis 2e zeigen, die Datenbasis des Funktionsmoduls SWU die Masterdatenbasis, so daß der erste Änderungsschritt hinsichtlich des in der Datenbasis SWU-DB abgespeicherten Datensatzes durchgeführt wird, während die Datenbasen der Funktionsmodule VMS und ETB in einem zweiten bzw. dritten Änderungsschritt aktualisiert werden.

Aus der vorstehenden Beschreibung ergibt sich, daß die zweiten Tabellen SATx programmtechnisch aus den in den zugehörigen Datenbasen abgespeicherten Systemkonfigurationsdatensätzen abgeleitet werden. Bei jedem Hochlauf der zugehörigen Funktionsmodule wird der Inhalt dieser Tabellen SATx einer Einheit KI übermittelt, die aus den übermittelten Informationen die Tabelle SEAT bildet. Bei der Eingabe eines betriebstechnischen Kommandos kann zunächst in der Tabelle SEAT für den Systemkonfigurationsdatensatz, der im Zusammenhang mit dem im Kommando angegebenen betriebstechnischen Auftrag AMO steht, eine SOLL-Ablaufzahlinformation um +1 erhöht werden. In der Folge wird der in der Masterdatenbasis abgespeicherte Systemkonfigurationsdatensatz geändert, was die Bildung eines Quittungssignals auslöst. Dieses wird der Einheit KI zugeführt, daß die entsprechende IST-Ablaufzahlinformation um +1 erhöht. In der Folge wird die entsprechende abhängige Datenbasis bzw. die entsprechenden Ablaufzahlinformationen in gleicher Weise behandelt.

Das betriebstechnische Kommando wird nach der Änderung des Systemkonfigurationsdatensatzes in der Masterdatenbasis unverändert der oder den abhängigen Datenbasen übermittelt. Dabei extrahiert die jeweilige abhängige Datenbasis aus den in dem betriebstechnischen Kommando enthaltenen Parameterdaten nur eine jeweils interessierende Datenuntermenge.

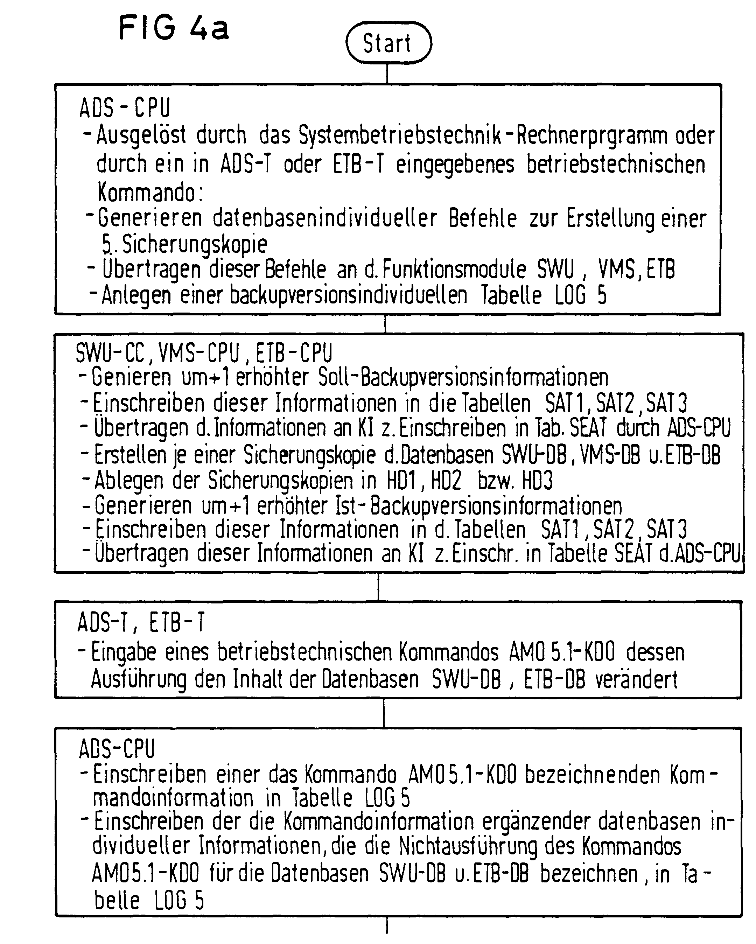

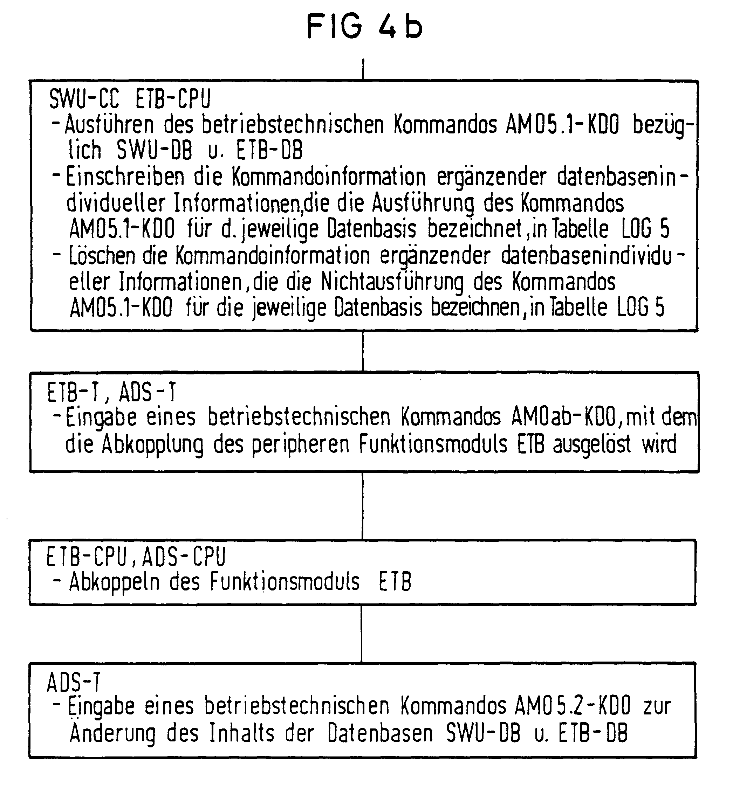

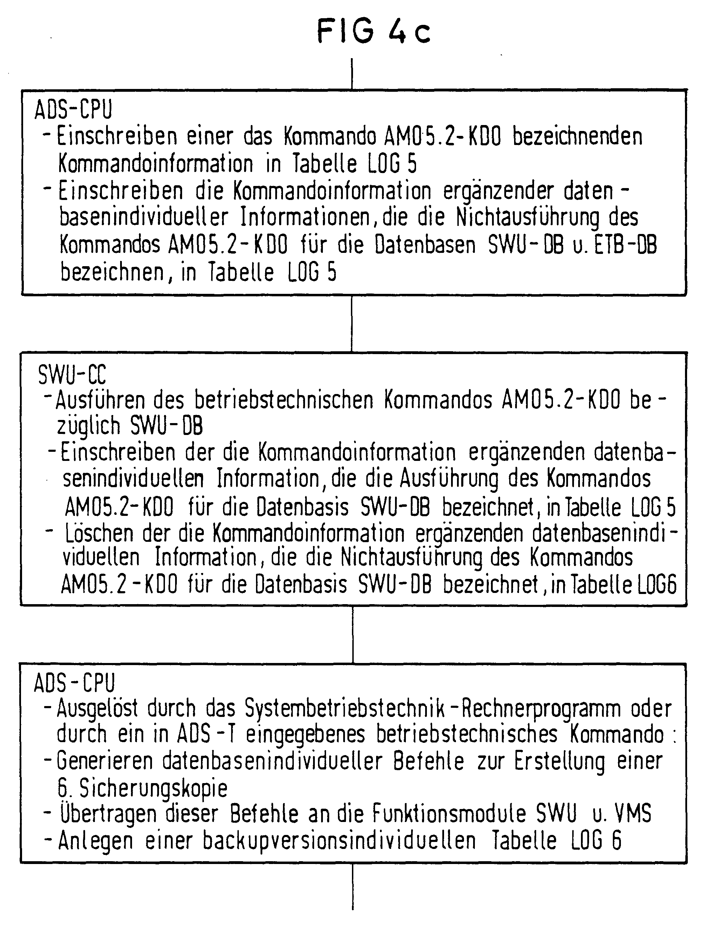

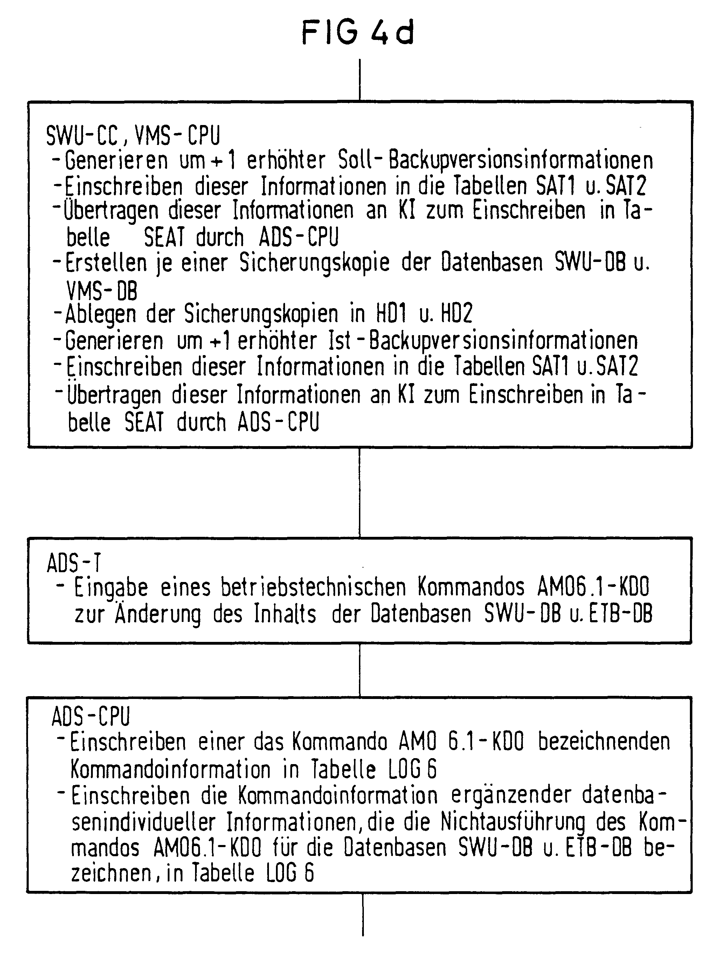

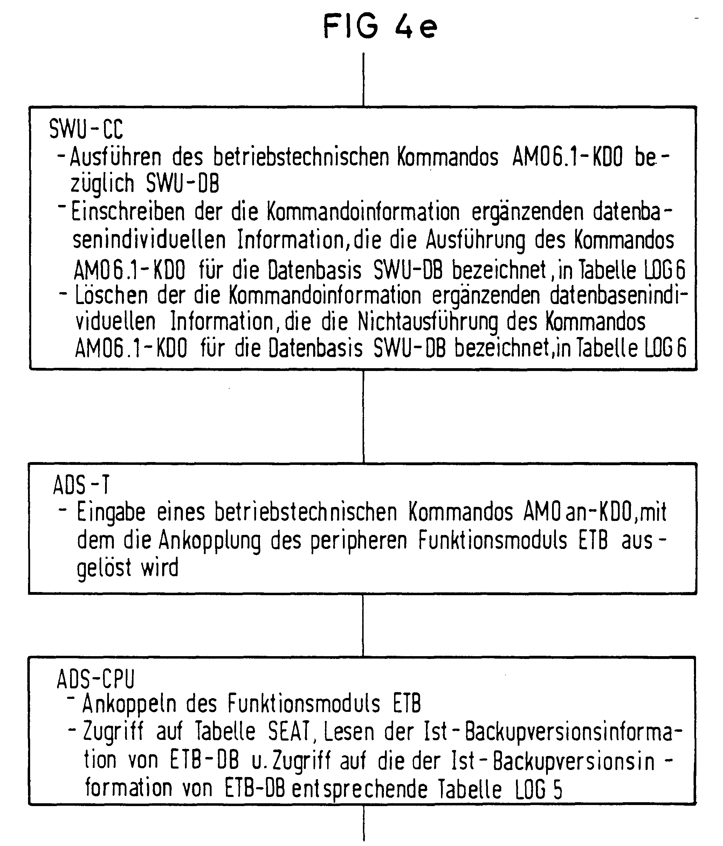

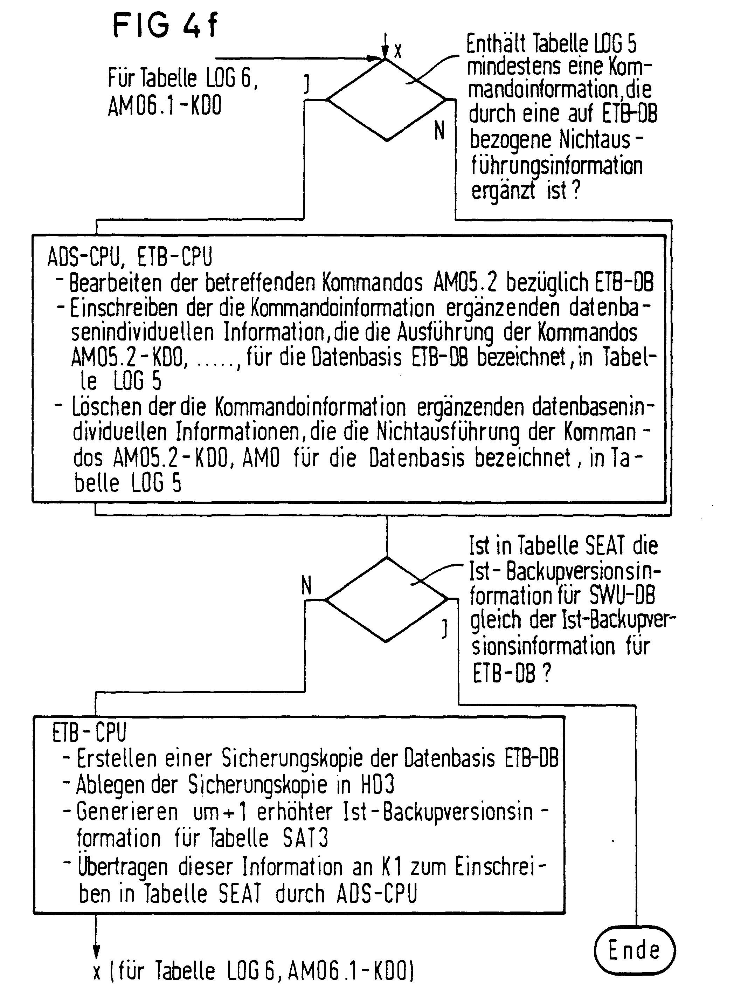

Es wird nun im folgenden davon ausgegangen, daß ein peripheres Funktionsmodul, beispielsweise ETB, vom Fernmeldevermittlungssystem abgekoppelt und zu einem späteren Zeitpunkt wieder an das Fernmeldevermittlungssystem angekoppelt wird. Die entsprechenden Prozeduren werden nun anhand des in FIG 4 dargestellten Flußdiagramms sowie der in den FIG 2 b bis 2 d dargestellten Tabellen, insbesondere einschließlich der jeweils letzten Zeile mit der Bezeichnung "BACKUP", und der Figuren 2f und 2g beschrieben.

Das Systembetriebstechnik-Rechnerprogramm erstellt im laufenden Systembetrieb Sicherungskopien vom Inhalt mindestens eines Teils der Datenbasen SWU-DB, VMS-DB und ETB-DB. Die Sicherungskopien werden von der jeweiligen Datenbasis getrennt in Speichern abgelegt. Insbesondere werden die Inhalte der Datenbasen SWU-DB, VMS-DB und ETB-DB in die Speicher HD1, HD2 und HD3 abgelegt. Diese Prozeduren können in an sich bekannter Weise selbsttätig ausgelöst durch das Systembetriebstechnik-Rechnerprogramm in zyklischen Abständen oder manuell durch Eingabe bestimmter betriebstechnischer Kommandos in die Endgeräte ADS-T oder FTB-T ausgelöst werden. Dabei erfolgen die Erstellung der Sicherungskopien und deren Ablagen in den Speichern für alle Funktionsmodule SWU, VMS, ETB idealerweise zeitgleich. Im Rahmen des erfindungsgemäßen Verfahrens werden die jeweiligen "BACKUP"-Versionen mit einer entsprechenden Zifferninformation versehen, wobei insbesondere SOLL- und IST-Informationen gebildet werden; sobald ein entsprechendes betriebstechnisches Kommando in das System eingegeben ist oder das Systembetriebstechnik-Rechnerprogramm die Erstellung einer Sicherungskopie einleitet, wird die Backup-Version-SOLL-Information in der Tabelle SEAT (Fig. 2b) um +1 erhöht. Werden die entsprechenden Prozeduren, d. h. das Erstellen einer Sicherungskopie für eine vorgegebene Datenbasis und das Ablegen der jeweiligen Sicherungskopie in einem Speicher, erfolgreich abgeschlossen, so wird die entsprechende Backup-Version-IST-Information um +1 erhöht. Diese Informationen werden in die in den FIG 2 b bis 2 e dargestellten Tabellen eingeschrieben.

Diese Vorgänge werden von der Steuerung ADS-CPU der betriebstechnischen Einheit ADS ausgelöst. Insbesondere werden diese Prozeduren zunächst für die Durchschalteeinheit SWU und im Anschluß daran für die weiteren Funktionsmodule, und zwar durch die jeweiligen funktionsmodulindividuellen Steuerungen SWU-CC, VMS-CPU und ETB-CPU durchgeführt. Die funktionsmodulindividuellen Steuerungen verwalten dabei auch die in den FIG 2 c bis 2 e dargestellten Tabellen, die u. a. die IST-Informationen der jeweiligen "BACKUP"-Version enthalten können. Sobald eine "BACKUP"-Version-IST-Information in eine der Tabellen SAT1, SAT2, SAT3 eingeschrieben ist, wird die entsprechende Information an die Einheit KI im Funktionsmodul ADS übertragen und in die dortige Tabelle SEAT (FIG 2 b) eingeschrieben. Bei einem ordnungsgemäßen Betrieb des Systems, bei dem sämtliche peripheren Funktionsmodule angekoppelt sind, sind die IST- und SOLL-"BACKUP"-Informationen für alle Funktionsmoduldatenbasen SWU-DB, VMS-DB, ETB-DB in der Tabelle SEAT gleich.

Es wird nun davon ausgegangen, daß nach dem Erstellen der fünften datenbasenindividuellen Sicherungskopien und deren Ablegen in die entsprechenden Speicher HD1, HD2 und HD3 das periphere Funktionsmodul ETB vom System abgekoppelt wird. Damit wird die zugehörige Datenbasis ETB-DB nicht aktualisiert; es bleibt damit bei den "BACKUP"-Versions-IST- bzw. -SOLL-Informationen "5/5".

Das Systembetriebstechnik-Rechnerprogramm ist weiter in der Weise ausgestaltet, daß im wesentlichen zeitgleich mit der Erstellung datenbasenindividueller Sicherungskopien die danach in das System eingegebenen betriebstechnischen Kommandos AMO5.1-KDO, AMO5.2-KDO, ... , die Datenbaseninhalte verändern, in Form von Kommandoinformationen in der zeitlichen Reihenfolge ihres Auftretens aufgelistet werden. Tabellen mit einer derartigen Auflistung sind in den FIG 2 f und 2 g dargestellt. In der Tabelle LOG5 sind für die "BACKUP"-Version "5" betriebstechnische Kommandos AMO5.1-KDO, AMO5.2-KDO mit der laufenden Nummer 1 und 2 schematisch dargestellt. Zu jedem betriebstechnischen Kommando schreibt die funktionsmodulindividuelle Steuerung in die Tabelle LOG eine datenbasenindividuelle Information ein, die die Ausführung bzw. Nichtausführung des jeweiligen betriebstechnischen Kommandos bezeichnet.

Die Information für die Ausführung eines betriebstechnischen Kommandos ist in den Tabellen der Figuren 2f und 2g mit "X" und die Information für die Nichtausführung des entsprechenden betriebstechnischen Kommandos ist mit "-" bezeichnet.

Insbesondere schreibt die Steuerung ADS-CPU zusammen mit einer Kommandoinformation, die ein Datenbaseninhalte veränderndes betriebstechnisches Kommando bezeichnet, eine datenbasenindividuelle Information "-" in die Tabelle LOG ein, welche die Nichtausführung dieses Kommandos für die betroffenen Datenbasen bezeichnet. Wird nach der Ausführung des Kommandos von der jeweiligen funktionsmodulindividuellen Steuerung die entsprechende Information an die Steuerung ADS-CPU gemeldet, so schreibt sie diese Information "X" in die Tabelle LOG ein und löscht damit die Information "-".

Bei dem in den Figuren 2f und 4 dargestellten Beispiel ist das betriebstechnische Kommando AMO5.1-KDO sowohl für die Datenbasis SWU-DB als auch für die Datenbasis ETB-DB ausgeführt worden, während das Kommando AMO5.2KDO nur für die Datenbasis SWU-DB ausgeführt worden ist. Grund hierfür ist die Abkopplung des Funktionsmoduls ETB nach der Ausführung des Kommandos AM05.1-KD0.

In der Folge werden für die unverändert an das System angekoppelten Funktionsmodule SWU und VMS sechste datenbasisindividuelle Sicherungskopien erstellt und diese in die Speicher HD1 und HD2 abgelegt. Die Steuerung ADS-CPU legt eine Tabelle LOG 6 (Fig. 2g) an, in welche eine Kommandoinformation bezüglich Kommando AMO6.1-KDO und datenbasenindividuelle Informationen zur Ausführung/Nichtausführung dieses Kommandos eingeschrieben werden.

Es wird nun davon ausgegangen, daß das Funktionsmodul ETB wieder an das System zu einem Zeitpunkt angekoppelt wird, zu dem für die Datenbasen SWU-DB und VMS-DB die "BACKUP"-IST- bzw. -SOLL-Information gleich "6/6" lautet (Figuren 2b, 2c, 2d). Die Steuerung ADS-CPU des Funktionsmoduls ADS greift auf die in FIG 2 b dargestellte Tabelle SEAT zu und entnimmt dieser Tabelle, daß das Funktionsmodul ETB vom System zu einem Zeitpunkt abgekoppelt wurde, zu den die "BACKUP"-IST- bzw. -SOLL-Informationen "5/5" lauten. Die Steuerung ADS-CPU greift nun auf die in FIG 2 f dargestellte Tabelle LOG5 zu und prüft, ob in der Tabelle LOG5 betriebstechnische Kommandos aufgelistet sind, die für die Datenbasis ETB-DB um eine Information "-" ergänzt sind, die die Nichtausführung des betreffenden Kommandos bezeichnet. Dies trifft im beschriebenen Beispiel für das Kommando AMO5.2-KDO zu. Die Steuerung ADS-CPU führt nun die entsprechende Information, die dem ersten betriebstechnischen Kommando AMO5.2-KDO entspricht, das für die Datenbasis ETB-DB nicht ausgeführt wurde, dem wieder angekoppelten peripheren Funktionsmodul ETB zu, dessen Steuerung ETB-CPU das betreffende betriebstechnische Kommando ausführt. In gleicher Weise werden gegebenfalls weitere betriebstechnischen Kommandos der Tabelle LOG5 und im Anschluß daran die betriebstechnischen Kommandos AMO6.1-KDO, ... , der Tabelle LOG6 nacheinander ausgeführt, die ursprünglich in der Spalte ETB-DB mit der Information "-" ergänzt sind. Nachdem die mit der Information "-" ergänzten Kommandos (AMO5.2-KDO) der Tabelle LOG 5 ausgeführt worden sind, erhöht die Steuerung ADS-CPU die Backupversionsinformation Soll auf "6" und veranlaßt die Steuerung ETB-CPU, den Inhalt der Datenbasis ETB-DB auf dem Speicher HD3 abzulegen. Im unmittelbaren Anschluß an diese Ablage ändert die Steuerung ETB-CPU die Backupversionsinformation Ist "5" der Tabelle SAT3 in "6", und meldet der Steuerung ADS-CPU diese Informationsaktualisierung, die sodann auch in der Tabelle SEAT (Fig. 2b) durchgeführt wird. (Backupversion-Ist-information "6"). Sie stimmt dann mit der Sollinformation "6" überein.

Nach jeder Ausführung eines der Kommandos AMO5.2-KDO AMO6.1-KDO übermittelt die Steuerung ETB-CPU der Steuerung ADS-CPU eine entsprechende Quittungsmeldung, die die Steuerung ADS-CPU zur Aktualisierung der Ausführungs-Nichtausführungsinformationen in der Tabellen LOG5 und LOG6 veranlaßt. Die Steuerung ETB-CPU erzeugt, nachdem sie alle ursprünglich nicht ausgeführten betriebstechnischen Kommandos ausgeführt hat, aktualisierte "BACKUP"-IST-Informationen, schreibt diese in die in FIG 2 e dargestellte Tabelle SAT3 ein und führt diese der Einheit KI zu, wo die Informationen in die in FIG 2 b dargestellte Tabelle SEAT ebenfalls eingeschrieben werden.

Das erfindungsgemäße Verfahren ist in der in Fig. 4 dargestellten Weise auch für den Fall anzuwenden, daß nicht ein ursprünglich an das System angekoppeltes peripheres Funktionsmodul abgekoppelt und später wiederum an das System angekoppelt wird, sondern auch, daß zu einem späteren Zeitpunkt ein neues peripheres Funktionsmodul erstmals an das System angekoppelt wird.

In diesem Fall wird das in Fig. 4b dargestellte betriebstechnische Kommando AMOab-KDO durch ein entsprechendes Kommando ersetzt, mit dem ein später erstmals an das System anzukoppelndes peripheres Funktionsmodul angemeldet wird. Die Steuerung ADS-CPU erweitert die gerade aktuelle Tabelle LOGx (im vorliegenden Fall "LOG 5") um eine neue Spalte für das neue periphere Funktionsmodul. Ferner erweitert die Steuerung ADS-CPU die Tabelle SEAT um die entsprechenden Speicherplätze (Fig. 2b). In die Zeile "BACKUP" der Tabelle SEAT schreibt die Steuerung ADS-CPU für das neue periphere Funktionsmodul die Soll- und Ist-Backupversionsinformationen der dem neuen peripheren Funktionsmodul zugeordneten Masterdatenbasis, z.B. SWU-DB, ein.

Zugleich wird von der Masterdatenbasis (z.B. SWU-DB) ein Datenabzug ("Dump") erstellt, und auf einem externen Speichermedium, z.B. HD1, abgelegt. Aus diesem Datenabzug, der zum Zeitpunkt seiner Erstellung eine identische Kopie des Inhalts der Masterdatenbasis darstellt, werden beispielsweise durch einen externen Rechner die für das neue periphere Funktionsmodul relevanten Datensätze extrahiert. Aus diesen extrahierten Datensätzen und gegebenenfalls funktionsmodulindividuellen Datensätzen wird eine neue Datenbasis gebildet, deren Inhalt bei einer Ankoppelung des neuen peripheren Funktionsmoduls an das System in dessen Datenbasis übertragen wird. Nach der Ankoppelung, die durch das in Fig. 4e dargestellte betriebstechnische Kommando AMOan-KDO ausgelöst werden kann, werden die in den Tabellen LOG abgespeicherten betriebstechnischen Kommandos, die mit einer Nichtausführungsinformation "-" ergänzt sind, wie zuvor beschrieben, durchgeführt. Alternativ kann das Systembetriebstechnik-Rechnerprogramm das Vermittlungssystem in der Weise steuern, daß die auf dem externen Speichermedium abgelegte neue Datenbasis mit den ihren Inhalt verändernden betriebstechnischen Kommandos bereits vor der Ankopplung des neuen peripheren Funktionsmoduls bearbeitet wird. Damit erübrigt sich diese Bearbeitung nach der eigentlichen Ankopplung, so daß das angekoppelte Funktionsmodul vorteilhafterweise unmittelbar nach der Ankopplung in laufende Synchronisierprozeduren einbezogen werden kann.

Die von der An- und Abkoppelung peripherer Funktionsmodule initiierten Prozeduren können auch ohne Eingabe entsprechender betriebstechnischer Kommandos erfolgen. Hierzu kann das System eine in der europäischen Patentanmeldung mit der Veröffentlichungsnummer EP 0 310 877 A1 (U.S. SERIAL No. 249, 289) beschriebene Schaltungsanordnung aufweisen. Dabei werden, um Identifikationsdaten einzelner Systembaueinheiten leicht aktualisieren und durch einen Signalsammler abfragen lassen zu können, die Identifikationsdaten mittels eines Einstellkomputers in EEPROMs eingegeben und mittels des Signalsammlers addressenselektiv und taktgesteuert abgefragt. Auf diese Weise läßt sich das erfindungsgemäße Verfahren beispielsweise in den Fällen durchführen, in denen Baugruppen peripherer Funktionsmodule aus der Systemschaltung herausgelöst bzw. in diese (wieder) eingefügt werden, ohne daß die Eingabe entsprechender betriebstechnischer Kommandos in das System erforderlich ist.

## Patentansprüche

1. Verfahren zur Änderung von Systemkonfigurationsdatensätzen in einem Fernmeldevermittlungssystem, das erste Funktionsmodule (SWU, ADS) zur Bearbeitung vermittlungstechnischer und/oder betriebstechnischer Prozeduren und das zweite periphere Funktionsmodule (VMS, ETB) zur Realisierung ergänzender Leistungsmerkmale umfaßt, wobei mindestens ein Teil der ersten Funktionsmodule (SWU, ADS) und mindestens ein Teil der zweiten Funktionsmodule (VMS, ETB) Datenbasen (SWU-DB, VMS-DB, ETB-DB) mit Systemkonfigurationsdatensätzen aufweist, von denen mindestens eine Untermenge korrespondierender Systemkonfigurationsdatensätze in mehr als einer Datenbasis (SWU-DB, VMS-DB, ETB-DB) abgespeichert ist, wobei die Systemkonfigurationsdatensätze ausgelöst durch in das System eingegebene betriebstechnische Kommandos durch ein Systembetriebstechnik-Rechnerprogramm änderbar sind, wobei das Systembetriebstechnik-Rechnerprogramm datenbasenindividuelle Sicherungskopien vom Inhalt mindestens eines Teils der Datenbasen (SWU-DB, VMS-DB, ETB-DB) erstellt und die Sicherungskopien von der jeweiligen Datenbasis (SWU-DB, VMS-DB, ETB-DB) getrennt in Speichern (HD1, HD2, HD3) ablegt,
**dadurch gekennzeichnet,**
**daß** das Systembetriebstechnik-Rechnerprogramm das System in der Weise steuert, daß im wesentlichen zeitgleich mit der Erstellung datenbasenindividueller Sicherungskopien die danach in das System eingegebenen, Datenbaseninhalte verändernde betriebstechnischen Kommandos in Form von Kommandoinformationen in der zeitlichen Reihenfolge ihres Auftretens aufgelistet werden und daß jede Kommandoinformation mit einer die Ausführung oder die Nichtausführung des jeweiligen betriebstechnischen Kommandos bezeichnenden datenbasisindividuellen Information ergänzt wird und daß bei einer Ankopplung einer Datenbasis (VMS-DB, ETB-DB) eines zuvor abgekoppelten peripheren Funktionsmoduls (VMS, ETB) an das System die den aufgelisteten Kommandoinformationen entsprechenden betriebstechnischen Kommandos, welche mit einer Nichtausführungsinformation ergänzt sind, in der aufgelisteten Reihenfolge bearbeitet werden.

2. Verfahren nach Anspruch 1,
**dadurch gekennzeichnet,**
**daß** das Systembetriebstechnik-Rechnerprogramm die nach der Erstellung datenbasenindividueller Sicherungskopien (BACKUP 5, BACKUP 6) in das System eingegebenen, Datenbaseninhalte verändernde betriebstechnischen Kommandos (AMO5.1-KDO, AMO5.2-KDO, ... , AMO6.1-K sowie die mit einer die Ausführung ("x") oder die Nichtausführung ("-") des jeweiligen betriebstechnischen Kommandos (AMO5.1-KDO, AMO5.2-KDO, ... , AMO6.1-KDO) bezeichnenden datenbasenindividuellen Informationen in sicherungskopienindividuelle Tabellen (LOG 5, LOG 6) einschreibt.

3. Verfahren nach einen der vorstehenden Ansprüche,
**dadurch gekennzeichnet, daß** das Systembetriebstechnik-Rechnerprogramm ausgelöst durch die Eingabe eines betriebstechnischen Kommandos (AMOn-KDO), das die Anmeldung eines zu einem späteren Zeitpunkt erstmals an das System anzukoppelnden peripheren Funktionsmoduls bezeichnet, das eine gegenüber einem weiteren Funktionsmodul (SWU) eine untergeordnete Hierarchiestufe aufweist, die Erstellung einer Kopie der Datenbasis (SWU-DB) des dem neuen peripheren Funktionsmodul hierarchisch übergeordneten Funktionsmoduls (SWU) veranlaßt, daß aus dieser Kopie die für das neue periphere Funktionsmodul relevanten Datensätze extrahiert und diese gegebenenfalls um funktionsmodulindividuelle Daten zu einer neuen Datenbasis verknüpft werden, und daß bei der erstmaligen Ankopplung des neuen peripheren Funktionsmoduls der Inhalt der neuen Datenbasis in die Datenbasis des neuen peripheren Funktionsmoduls übertragen wird, und daß die den aufgelisteten Kommandoinformationen entsprechenden betriebstechnischen Kommandos, welche mit einer Nichtausführungsinformation ergänzt sind, in der aufgelisteten Reihenfolge bearbeitet werden.

4. Verfahren nach einem der vorstehenden Ansprüche,
**dadurch gekennzeichnet,**
**daß** die An- und/oder Abkopplung peripherer Funktionsmodule durch manuell in das System eingegebene betriebstechnische Kommandos oder durch systemintern gebildete, den Verbindungszustand der peripheren Funktionsmodule bezeichnende Informationen ausgelöst wird.

5. Fernmeldervermittlungssystem mit
- einer Durchschalteeinheit (SWU),
- einer der Durchschalteeinheit (SWU) zugeordneten Datenbasis (SWU-DB) mit Systemkonfigurationsdatensätzen,
- einer an die Durchschalteeinheit (SWU) anschaltbaren betriebstechnischen Einheit (ADS) mit einem betriebstechnischen Endgerät (ADS-T) zur Eingabe von betriebstechnischen Kommandos (AMO5.1-KDO, AMO5.2-KDO, ..., AMO6.1-KDO, AMO6.2-KDO, ..., AMOab-KDO, AMOan-KDO, AMOn-KDO),
- mindestens einem peripheren Funktionsmodul (VMS, ETB) zur Realisierung ergänzender Leistungsmerkmale,
- mindestens einer dem mindestens einen peripheren Funktionsmodul (VMS, ETB) zugeordneten Datenbasis (VMS-DB, ETB-DB) mit Systemkonfigurationsdatensätzen,
- mindestens einem Systemrechner (SWU-CC, ADS-CPU, VMS-CPU, ETB-CPU),
- einem auf dem mindestens einen Systemrechner (SWU-CC, ADS-CPU, VMS-CPU, ETB-CPU) installierten Systembetriebstechnik-Rechnerprogramm mit Programmodulen (AMO1, ..., AMOn) zur jeweils eigenständigen Bearbeitung der betriebstechnischen Kommandos (AMO5.1-KDO, AMO5.2-KDO, ..., AMO6.1-KDO, AMO6.2-KDO, ..., AMOab-KDO, AMOan-KDO, AMOn-KDO),
- Speichereinrichtungen (HD1, HD2, HD3) für die Datenbasen (SWU-DB, VMS-DB, ETB-DB),
**dadurch gekennzeichnet, daß** durch das auf dem mindestens einen Systemrechner (SWU-CC, ADS-CPU, VMS-CPU, ETB-CPU) installierte Systembetriebstechnik-Rechnerprogramm eine Steuerungseinrichtung zur Erstellung von datenbasisindividuellen Sicherungskopien (BACKUP 5, BACKUP 6) und zur im wesentlichen zeitgleichen Auflistung von Kommandoinformationen für Datenbasisinhalte verändernde betriebstechnische Kommandos (AMO5.1-KDO, AMO5.2-KDO, ..., AMO6.1-KDO) in der zeitlichen Reihenfolge ihres Auftretens implementiert ist, wobei die Kommandoinformationen jeweils eine datenbasisindividuelle, eine Ausführung oder eine Nichtausführung kennzeichenende Information aufweisen, und daß das Fernmeldevermittlungssystem Mittel zum Ankoppeln einer einem peripheren Funktionsmodul (VMS, ETB) zugeordneten Datenbasis (VMS-DB, ETB-DB) sowie Mittel zum Weiterleiten und Auswerten der Kommandoinformationen aufweist.

6. Fernmeldevermittlungssystem nach Anspruch 5,
**dadurch gekennzeichnet, daß** mindestens einem Teil der Funktionsmodule (SWU, VMS, ETB) erste Tabellenspeicher (SAT1, SAT2, SAT3) zugeordnet sind, die die Anzahl der erstellten funktionsmodulindividuellen Sicherungskopien bezeichnen, daß einem Systemrechner (ADS-CPU) ein zweiter Tabellenspeicher (SEAT) für Informationen zugeordnet ist, die die Anzahl der erstellten funktionsmodulindividuellen Sicherungskopien bezeichnen, und daß diesem Systemrechner (ADS-CPU) weiterhin ein Speicher für sicherungskopienindividuellen Tabellen (LOG 5, LOG 6) zugeordnet ist.

## Claims

1. Method for changing system configuration data records in a telecommunications switching system which comprises first function modules (SWU, ADS) for processing switching and/or operational procedures and second peripheral function modules (VMS, ETB) for providing supplementary service features, with at least some of the first function modules (SWU, ADS) and at least some of the second function modules (VMS, ETB) having databases (SWU-DB, VMS-DB, ETB-DB) with system configuration data records, of which at least a subset of corresponding system configuration data records is stored in more than one database (SWU-DB, VMS-DB, ETB-DB), in which case the system configuration data records can be changed by means of a system operation computer program initiated by an operation command entered in the system, and in which case the system operation computer program produces database-specific backup copies of the contents of at least some of the databases (SWU-DB, VMS-DB, ETB-DB) and stores the backup copies separately from the respective database (SWU-DB, VMS-DB, ETB-DB) in memories (HD1, HD2, HD3),
**characterized**
**in that** the system operation computer program controls the system in such a way that, substantially at the same time that the database-specific backup copies are created, the operational commands which are subsequently entered into the system and change the database content are listed in the form of command information in the time sequence of their occurrence, and in that each command information item has added to it database-specific information which denotes the execution or non-execution of the respective operational command, and in that, when a database (VMS-DB, ETB-DB) of a previously disconnected peripheral function module (VMS, ETB) is coupled to the system, the operational commands which corresponds to the listed command information and have non-execution information added to them are processed in the listed sequence.

2. Method according to Claim 1,
**characterized**
**in that** the system operation computer program writes the operational commands (AMO5.1-KDO, AMO5.2-KDO, .... AMO6.1-KDO) which have been entered in the system since creation of the database-specific backup copies (BACKUP 5, BACKUP 6) and have changed the database contents, together with database-specific information which denotes the execution ("x") or non-execution ("-") of the respective operational commands (AMO5.1-KDO, AMO5.2-KDO, ..., AMO6.1-KDO) to backup copy-specific tables (LOG 5, LOG 6).

3. Method according to one of the preceding claims,
**characterized**
**in that**, initiated by the inputting of an operational command (AMOn-KDO) which denotes the registration of a peripheral function module which is to be coupled to the system for the first time at a later time and whose hierarchy level is lower than that of a further function module (SWU), the system operation computer program initiates the creation of a copy of the database (SWU-DB) of the function module (SWU) which is hierarchically superior to the new peripheral function module, in that the data records which are relevant to the new peripheral function module are extracted from this copy and, if appropriate, are linked to a new database for function-module-specific data, and in that, when the new peripheral functional module is coupled for the first time, the contents of the new database are transmitted to the database for the new peripheral function module, and in that the operational commands which correspond to the listed command information and have had non-execution information added to them are processed in the listed sequence.

4. Method according to one of the preceding claims,
**characterized**
**in that** the coupling and/or disconnection of peripheral function modules is initiated by means of operational commands which are entered into the system manually or by means of information which is formed within the system and denotes the connection state of the peripheral function modules.

5. Telecommunications switching system having
- a switching unit (SWU),
- a database (SWU-DB) which is associated with the switching unit (SWU) and has system configuration data records,
- an operational unit (ADS) which can be connected to the switching unit (SWU) and has an operational terminal (ADS-T) for entering operational commands (AMO5.1-KDO, AMO5.2-KDO, ..., AMO6.1-KDO, AMO6.2-KDO, ..., AMOab-KDO, AMOan-KDO, AMOn-KDO),
- at least one peripheral functional module (VMS, ETB) for providing supplementary service features,
- at least one database (VMS-DB, ETB-VB) which is associated with at least one peripheral function module (VMS, ETB) and has system configuration data records,
- at least one system computer (SWU-CC, ADS-CPU, VMS-CPU, ETB-CPU),
- a system operation computer program, which is installed on the at least one system computer (SWU-CC, ADS-CPU, VMS-CPU, ETB-CPU) and has program modules (AMO1, ..., AMOn) for respective autonomous processing of the operational commands (AMO5.1-KDO, AMO5.2-KDO, ..., AMO6.1-KDO, AMO6.2-KDO, ..., AMOab-KDO, AMOan-KDO, AMOn-KDO),
- memory devices (HD1, HD2, HD3) for the databases (SWU-DB, VMS-DB, ETB-DB),
**characterized**
**in that** the system operational computer program installed on the at least on system computer (SWU-CC, ADS-CPU, VMS-CPU, ETB-CPU) provides a control device for creating database-specific backup copies (BACKUP 5, BACKUP 6) and for substantially simultaneous listing of command information for commands (AM05.1-KDO, AMO5.2-KDO, ..., AMO6.1-KDO) which change database contents, in the time sequence of their occurrence, in which case the command information items in each case have database-specific information which identifies execution or non-execution, and in that the telecommunications switching system has means for coupling a database (VMS-DB, ETB-DB) which is associated with a peripheral function module (VMS, ETB), and means for passing on and evaluating the command information.

6. Telecommunications switching system according to Claim 5,
**characterized**
**in that** some of the function modules (SWU, VMS, ETB) have associated first table memories (SAT1, SAT2, SAT3) which denote the number of function-module-specific backup copies created, in that a system computer (ADS-CPU) has an associated second table memory (SEAT) for information which denotes the number of function-module-specific backup copies created, and in that this system computer (ADS-CPU) furthermore has an associated memory for backup-copy-specific tables (LOG 5, LOG 6).

## Revendications

1. Procédé pour modifier des ensembles de données de configuration de système dans un système de commutation de télécommunications qui comprend des premiers modules (SWU, ADS) fonctionnels pour le traitement de procédures de la technique de commutation et/ou de la technique d'exploitation et qui comprend des deuxièmes modules (VMS, ETB) fonctionnels périphériques pour la réalisation de facilités offertes aux usagers en complément, au moins une partie des premiers modules (SWU, ADS) fonctionnels et au moins une partie des seconds modules (VMS, ETB) comportant des bases (SWU-DB, VMS-DB, ETB-DB) de données ayant des ensembles de données de configuration du système dont au moins une sous-quantité d'ensembles de données de configuration du système correspondant est enregistrée dans plus d'une base (SWU-DB, VMS-DB, ETB-DB) de données, les ensembles de données de configuration du système pouvant être modifiés, d'une manière déclenchée par des commandes de la technique d'exploitation entrée dans le système, par un programme d'ordinateur de la technique d'exploitation du système, le programme d'ordinateur de la technique d'exploitation du système produisant des copies de sauvegarde propres aux bases de données du contenu d'au moins une partie des bases (SWU-DB, VMS-DB, ETB-DB) de données et les copies de sauvegarde étant enregistrées dans des mémoires (HD1, HD2, HD3) de manière distincte de la base (SWU-DB, VMS-DB, ETB-DB) de données associée, **caractérisé en ce que** le programme d'ordinateur de la technique d'exploitation du système commande le système de telle manière que, sensiblement en même temps que la production de copies de sauvegarde propres aux bases de données, qui sont entrées ensuite dans le système, des commandes de la technique d'exploitation modifiant des contenus de bases de données sous la forme d'informations de commande sont listées suivant la succession dans le temps de leur apparition et que chaque information de commande est complétée par une information propre aux bases de données désignant la réalisation ou l'absence de réalisation de la commande de la technique d'exploitation associée et **en ce que**, lors d'un raccordement au système d'une base (VMS-DB, ETB-DB) de données d'un module (VMS, ETB) fonctionnel périphérique précédemment raccordé, les commandes de la technique d'information qui correspondent aux informations de commande listées et qui sont complétées par une information d'absence de réalisation sont traitées dans la succession listée.

2. Procédé suivant la revendication 1, **caractérisé en ce que** le programme d'ordinateur de la technique d'exploitation du système écrit les commandes (AMO5.1-KDO, AMO5.2-KDO, ..., AMO6.1-KDO) de la technique d'exploitation modifiant des contenus de bases de données entrés après la production de copies (BACKUP 5, BACKUP 6) de sauvegarde propres aux bases de données dans le système, ainsi que les informations propres aux bases de données, désignant la réalisation ("x") ou la non réalisation ("-") de la commande (AMO5.1-KDO, AMO5.2-KDO, ..., AMO6.1-KDO) de la technique d'exploitation associée dans des tableaux (LOG 5, LOG 6) propres aux copies de sauvegarde.

3. Procédé suivant l'une des revendications précédentes, **caractérisé en ce que** le programme d'ordinateur de la technique d'exploitation du système provoque, de manière déclenchée par l'entrée d'une commande (AMOn-KDO) de la technique d'exploitation qui désigne la signalisation d'un module fonctionnel périphérique à raccorder pour la première fois à un instant ultérieur au système, qui a par rapport à un autre module (SWU) fonctionnel un étage hiérarchique inférieur, la production d'une copie de la base (SWU-DB) de données du module (SWU) fonctionnel hiérarchiquement supérieur au nouveau module fonctionnel périphérique, **en ce que**, à partir de cette copie, les ensembles de données pertinents pour le nouveau module fonctionnel périphérique sont extraits et sont combinés, éventuellement complétés de données propres au module fonctionnel, en une nouvelle base de données et **en ce que**, lors de la première connexion du nouveau module fonctionnel périphérique, le contenu de la nouvelle base de données est transmis à la base de données du nouveau module fonctionnel périphérique, et **en ce que** les commandes de la technique d'exploitation qui correspondent aux informations de commande listées et qui sont complétées par une information de non réalisation sont traitées dans la succession listée.

4. Procédé suivant l'une des revendications précédentes, **caractérisé en ce que** la connexion et/ou la déconnexion de modules fonctionnels périphériques est déclenchée par des commandes de la technique d'exploitation entrées manuellement dans le système ou par des informations formées de manière interne au système, désignant l'état de liaison des modules fonctionnels périphériques.

5. Système de commutation de télécommunications comportant
- une unité (SWU) d'interconnexion,
- une base (SWU-DB) de données associée à l'unité (SWU) d'interconnexion et comportant des ensembles de données de configuration du système,
- une unité (ADS) de la technique d'exploitation pouvant être raccordée à l'unité (SWU) d'interconnexion et comportant un terminal (ADS-T) de la technique d'exploitation pour entrer des commandes (AMO5.1-KDO, AMO5.2-KDO, ..., AMO6.1-KDO, AMO6.2-KDO, ..., AMOab-KDO, AMOan-KDO, AMOn-KDO) de la technique d'exploitation,
- au moins un module (VMS, ETB) fonctionnel périphérique pour la réalisation de facilités offertes aux usagers complémentaires,
- au moins une base (VMS-DB, ETB-DB) associée au au moins un module (VMS, ETB) fonctionnel périphérique et comportant des ensembles de données de configuration du système,
- au moins un ordinateur (SWU-CC, ADS-CPU, VMS-CPU, ETB-CPU) de système,
- un programme d'ordinateur de la technique d'exploitation du système installé sur le au moins un ordinateur (SWU-CC, ADS-CPU, VMS-CPU, ETB-CPU) du système et comportant des modules (AMO1, ..., AMOn) de programme pour traiter chaque fois de manière autonome les commandes (AMO5.1-KDO, AMO5.2-KDO, ..., AMO6.1-KDO, AMO6.2-KDO, ..., AMOab-KDO, AMOan-KDO, AMOn-KDO) de la technique d'exploitation,
- des dispositifs (HD1, HD2, HD3) de mémorisation pour les bases (SWU-DB, VMS-DB, ETB-DB) de données,
**caractérisé en ce que** par le programme d'ordinateur de la technique d'exploitation du système installé sur le au moins un ordinateur (SWU-CC, ADS-CPU, VMS-CPU, ETB-CPU) du système, un dispositif de commande pour la production de copies (BACKUP 5, BACKUP 6) de sauvegarde propres aux bases de données et pour le listage sensiblement simultané d'informations de commande est mis en oeuvre pour des commandes (AMO5.1-KDO, AMO5.2-KDO, ..., AMO6.1-KDO) de la technique d'exploitation modifiant des contenus de bases de données dans la succession dans le temps de leur apparition, les informations de commande comportant chaque fois une information propre aux bases de données, caractérisant une réalisation ou une absence de réalisation, et **en ce que** le système de commutation de télécommunications comporte des moyens pour raccorder une base (VMS-DB, ETB-DB) de données associée à un module (VMS, ETB) fonctionnel périphérique ainsi que des moyens pour retransmettre et exploiter les informations de commande.

6. Système de commutation de télécommunications suivant la revendication 5, **caractérisé en ce qu'**il est associé à au moins une partie des modules (SWU, VMS, ETB) fonctionnels des premières mémoires (SAT1, SAT2, SAT3) de tableaux qui désignent le nombre des copies de sauvegarde propres aux modules fonctionnels produites, **en ce qu'**il est associé à un ordinateur (ADS-CPU) du système une deuxième mémoire (SEAT) de tableau pour des informations qui désignent le nombre des copies de sauvegarde propres aux modules fonctionnels produites, et **en ce qu'**il est associé à cet ordinateur (ADS-CPU) du système de plus une mémoire pour des tableaux (LOG 5, LOG 6) propres aux copies de sauvegarde.
